# EUROPÄISCHE PATENTSCHRIFT

(11) **EP 3 237 164 B1**
(45) Veröffentlichungstag und Bekanntmachung des Hinweises auf die Patenterteilung: **03.07.2019**
(21) Anmeldenummer: 15813794.3
(22) Anmeldetag: 16.12.2015
(51) Int. Cl.: B28D 1/04, B28D 1/12

(54) **BOHRRING FÜR EINE KERNBOHRKRONE**
DRILL RING FOR A CORE DRILL BIT
BAGUE DE FORAGE POUR UNE COURONNE DE CAROTTAGE

(30) Priorität: 22.12.2014 EP 14199716
(43) Veröffentlichungstag der Anmeldung: 01.11.2017
(73) Patentinhaber: Hilti Aktiengesellschaft, 9494 Schaan (LI)
(72) Erfinder: MUELLER, Matthias, 9470 Buchs (CH); SONDEREGGER, Marcel, 9436 Balgach (CH)
(74) Vertreter: Hilti Aktiengesellschaft Corporate Intellectual Property
(86) Internationale Anmeldenummer: PCT/EP2015/079936
(87) Internationale Veröffentlichungsnummer: WO 2016/102261

(56) Entgegenhaltungen:
- WO-A2-2005/014243
- JP-A- H0 671 638
- JP-A- H05 169 307
- US-A- 3 494 348
- US-A- 5 137 098
- US-A- 5 316 416
- US-A1- 2006 130 823
- US-B1- 7 178 517

## Beschreibung

### Technisches Gebiet

Die vorliegende Erfindung betrifft einen Bohrring für eine Kernbohrkrone gemäß dem Oberbegriff des Anspruchs 1.

### Stand der Technik

Bei Diamantwerkzeugen, die als Kernbohrkronen ausgebildet sind, wird zwischen Kernbohrkronen mit einem geschlossenen Bohrring und segmentierten Kernbohrkronen mit einzelnen Schneidsegmenten unterschieden. Kernbohrkronen bestehen aus einem Bearbeitungsabschnitt, einem zylinderförmigen Bohrschaft und einem Aufnahmeabschnitt mit Einsteckende. Die Kernbohrkrone wird über das Einsteckende in der Werkzeugaufnahme eines Kernbohrgerätes befestigt und im Bohrbetrieb vom Kernbohrgerät um eine Drehachse angetrieben.

Geschlossene Bohrringe werden aus einem Pulvergemisch mit statistisch verteilten Diamantpartikeln hergestellt. Das Pulvergemisch wird in eine Werkzeugform gefüllt und zu einem Grünteil gepresst; das Grünteil wird unter Temperatur- und Druckeinwirkung zu einem geschlossenen Bohrring gesintert. US 5,316,416 offenbart den Aufbau von geschlossenen Bohrringen, die über die gesamte Höhe des Bohrringes gute Abtrageigenschaften aufweisen. Die Bohrringe weisen mehrere obere Schlitze und untere Schlitze auf, die entlang der Umfangsrichtung der Bohrringe verteilt sind. Die oberen Schlitze erstrecken sich über die halbe Höhe der Bohrringe und münden in die dem Bohrschaft abgewandte Bearbeitungsfläche der Bohrringe. Die unteren Schlitze sind entlang der Umfangsrichtung der Bohrringe jeweils zwischen den oberen Schlitzen angeordnet und münden in die dem Bohrschaft zugewandte Anbindungsfläche der Bohrringe. Die oberen und unteren Schlitze überlappen sich in der Höhe der Bohrringe. Durch die Verteilung der oberen und unteren Schlitze über die gesamte Höhe der Bohrringe wird eine Kühl- und Spülflüssigkeit über die gesamte Einsatzzeit des Bohrringes an die Bearbeitungsstelle transportiert und abgetragenes Material wird aus dem Bohrbereich entfernt.

Bei der Herstellung von Schneidsegmenten für segmentierte Kernbohrkronen haben sich im Profibereich Verfahren etabliert, bei denen die Diamantpartikel in einem vorgegebenen Setzmuster angeordnet werden. Ein Grünteil wird schichtweise aus Pulverschichten, die ein Pulvergemisch enthalten, und Diamantschichten mit Diamantpartikeln, die in einem Setzmuster angeordnet sind, aufgebaut und anschließend unter Temperatur- und Druckeinwirkung zum Schneidsegment gesintert. Die Schneidsegmente werden entlang einer Umfangsrichtung des zylinderförmigen Bohrschaftes angeordnet und mit dem Bohrschaft verschweißt, verlötet und auf andere Weise befestigt. Die Schneidgeschwindigkeit, die mit einer segmentierten Kernbohrkrone erreichbar ist, hängt wesentlich von der Anordnung der Diamanten im Schneidsegment ab. Beim schichtweisen Aufbau kann die Anordnung der Diamantpartikel über die Anzahl an Diamantschichten, den Abstand zwischen den Diamantschichten und die Größe der Diamantpartikel beeinflusst werden.

JPH 05-169307 offenbart einen Bohrring für eine zylinderförmige Kernbohrkrone mit mindestens zwei Ringabschnitten, die aus einem gesinterten Pulvergemisch und Diamantpartikeln aufgebaut sind. Die Ringabschnitte umfassen n erste Ringabschnitte und n zweite Ringabschnitte, die entlang einer Umfangsrichtung des Bohrringes abwechselnd hintereinander angeordnet sind und und die an den Seitenkanten miteinander verbunden sind. Die ersten Ringabschnitte sind aus einem gesinterten ersten Pulvergemisch und ersten Diamantpartikeln aufgebaut und die zweiten Ringabschnitte sind aus einem gesinterten zweiten Pulvergemisch aufgebaut. Nachteilig ist, dass nur die ersten Ringabschnitte Diamantpartikel enthalten.

### Darstellung der Erfindung

Die Aufgabe der vorliegenden Erfindung besteht darin, die Technologie der gesetzten Diamantpartikel auf geschlossene Bohrringe anzuwenden und die Bearbeitungsqualität, die mit den so hergestellten Bohrringen erreichbar ist, zu erhöhen. Dabei sollen insbesondere verschiedene Untergründe, beispielsweise armierter Beton, gleichzeitig mit erhöhter Bearbeitungsqualität bearbeitet werden können.

Diese Aufgabe wird bei dem eingangs genannten Bohrring erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass die ersten Ringabschnitte aus einem gesinterten ersten Pulvergemisch und gesetzten ersten Diamantpartikeln aufgebaut sind und die zweiten Ringabschnitte aus einem gesinterten zweiten Pulvergemisch und gesetzten zweiten Diamantpartikeln aufgebaut sind, wobei die gesetzten ersten und zweiten Diamantpartikel in einer Ebene senkrecht zur Zylinderachse auf kreisförmigen Abtragbahnen angeordnet sind. Der Aufbau des Bohrringes aus ersten Ringabschnitten mit ersten Diamantpartikeln und zweiten Ringabschnitten mit zweiten Diamantpartikeln ermöglicht die gleichzeitige Bearbeitung von unterschiedlichen Untergründen mit dem Bohrring. Beim Kernbohren in Betonwerkstoffe mit eingebetteten Armierungseisen, die auch als armierte Betonwerkstoffe bezeichnet werden, trifft ein Bohrring auf unterschiedliche Untergründe in Form von Beton und Armierungseisen.

Die Eigenschaften der ersten und zweiten Ringabschnitte können über das erste und zweite Pulvergemisch und die ersten und zweiten Diamantpartikel eingestellt werden. Die gesetzten ersten und zweiten Diamantpartikel sind auf kreisförmigen Abtragbahnen angeordnet; hintereinander angeordnete Diamantpartikel beschreiben bei der Bearbeitung die gleiche Abtragbahn. Für die Bearbeitung von armierten Betonwerkstoffen hat es sich als vorteilhaft erwiesen, wenn die kreisförmigen Abtragbahnen möglichst aneinander angrenzen. Die Eigenschaften der ersten Ringabschnitte können beispielsweise an den ersten Untergrund Beton angepasst werden und die Eigenschaften der zweiten Ringabschnitte an den zweiten Untergrund Armierungseisen. Bei den Diamantpartikeln können der mittlere Diamantdurchmesser, die Diamantverteilung und die Anzahl an Diamantpartikeln verändert werden.

Bevorzugt weisen die ersten Ringabschnitte auf der Außenseite einen diamantbesetzten Bereich auf und die zweiten Ringabschnitte weisen auf der Außenseite einen diamantlosen Bereich auf. Durch die abwechselnde Anordnung von diamantbesetzten Bereichen und diamantlosen Bereichen an der Außenseite des Bohrringes nimmt die Anzahl an Abtragbahnen, die die Diamantpartikel bei der Bearbeitung in der Ebene senkrecht zur Zylinderachse beschreiben, zu. Bei gleicher Anzahl an Diamantpartikeln kann mehr Material abgetragen werden und die Performance des Bohrringes verbessert sich.

Besonders bevorzugt stimmen das erste Pulvergemisch der ersten Ringabschnitte und das zweite Pulvergemisch der zweiten Ringabschnitte überein. Besonders bevorzugt weisen die ersten Diamantpartikel der ersten Ringabschnitte und die zweiten Diamantpartikel der zweiten Ringabschnitte die gleiche Diamantverteilung und den gleichen mittleren Diamantdurchmesser auf. Durch die Verwendung des gleichen Pulvergemisches und der gleichen Diamantpartikel kann der apparative Aufwand bei der Herstellung des Bohrringes reduziert werden; es werden nur ein Pulvergemisch und eine Sorte an Diamantpartikeln benötigt.

Besonders bevorzugt sind die ersten Diamantpartikel der ersten Ringabschnitte in der Ebene senkrecht zur Zylinderachse auf einer ersten Anzahl von ersten Abtragbahnen und die zweiten Diamantpartikel der zweiten Ringabschnitte auf einer zweiten Anzahl von zweiten Abtragbahnen angeordnet. Über die Anzahl an Abtragbahnen, die der Anzahl der Diamantschichten entspricht, kann die Anzahl an Diamantpartikeln verändert werden.

In einer bevorzugten Variante stimmen die erste Anzahl der ersten Abtragbahnen und die zweite Anzahl der zweiten Abtragbahnen überein. Durch die Verwendung des gleichen Pulvergemischs, der gleichen Diamantpartikel und der gleichen Anzahl an Diamantschichten kann der apparative Aufwand bei der Herstellung des Bohrringes reduziert werden; es wird nur eine Sorte an Grünteilen aufgebaut.

Besonders bevorzugt unterscheiden sich die ersten Krümmungsradien der ersten Abtragbahnen von den zweiten Krümmungsradien der zweiten Abtragbahnen. Unterschiedliche Krümmungsradien führen dazu, dass die Anzahl der Abtragbahnen zunimmt. Wenn alle Krümmungsradien verschieden sind, ergibt sich die Anzahl der Abtragbahnen des Bohrringes als Summe aus der ersten Anzahl der ersten Abtragbahnen und der zweiten Anzahl der zweiten Abtragbahnen.

Besonders bevorzugt sind die Anzahl an Abtragbahnen und die Größe der Diamantpartikel so eingestellt, dass der mittlere Diamantdurchmesser der Diamantpartikel mindestens 45 % vom Quotienten aus Bohrringbreite und Anzahl an Abtragbahnen beträgt. Für die Bearbeitung von armierten Betonwerkstoffen hat es sich als vorteilhaft erwiesen, wenn die kreisförmigen Abtragbahnen, die die Diamantpartikel bei der Bearbeitung beschreiben, möglichst aneinander angrenzen und die Armierungseisen nahezu vollständig von den Diamantpartikeln abgetragen werden.

Besonders bevorzugt ist zwischen den Ringabschnitten mindestens ein Wasserschlitz vorgesehen. Dabei beträgt die Höhe des mindestens einen Wasserschlitzes zwischen 1/3 und 5/6 der Gesamthöhe des Bohrringes. Bei Bohrringen, die mit dem Bohrschaft verschweißt werden, wird der Anbindungsbereich ohne Diamanten aufgebaut und ist für die Bearbeitung ungeeignet. Für die Bearbeitung von Untergründen eignet sich die mit Diamantpartikeln versehene Matrixzone, die ca. 5/6 der Gesamthöhe des Bohrringes darstellt.

Besonders bevorzugt wird die Höhe des mindestens einen Wasserschlitzes auf 2/3 der Gesamthöhe des Bohrringes eingestellt. Bei einem Anteil von 2/3 der Gesamthöhe kann eine ausreichende Festigkeit des fertigen Bohrringes sichergestellt werden. Während der Bearbeitung mit dem Bohrring muss Kühlflüssigkeit an die Bearbeitungsstelle transportiert werden; daher werden die Wasserschlitze im Bohrring so lang wie möglich ausgebildet.

Besonders bevorzugt weist mindestens ein Ringabschnitt eine Bohrung aufweist, die die Innen- und Außenseite des Bohrringes verbindet. Dabei ist die Bohrung besonders bevorzugt zumindest teilweise unterhalb des mindestens einen Wasserschlitzes angeordnet. Die zusätzliche Bohrung stellt eine ausreichende Kühlung des Bohrringes sicher, wenn der mindestens eine Wasserschlitz abgetragen ist.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Kernbohrkrone bestehend aus einem Bohrring, einem zylinderförmigen Bohrschaft und einem Aufnahmeabschnitt;
- FIGN. 2A-C: eine erste Ausführungsform eines erfindungsgemäßen Bohrringes, der aus vier Ringabschnitten aufgebaut ist, in einer dreidimensionalen Darstellung (FIG. 2A), in einem Querschnitt senkrecht zur Drehachse (FIG. 2B) und in einer Detailvergrösserung (FIG. 2C);
- FIG. 3: eine zweite Ausführungsform eines erfindungsgemäßen Bohrringes, der aus vier Ringabschnitten mit Wasserschlitzen aufgebaut ist; und
- FIGN. 4A-D: die Herstellung des Bohrringes der FIG. 3 aus vier gleichen Grünteilen mit einer sechseckigen Grundfläche (FIG. 4A), wobei zwei Grünteile zu konkaven ersten Ringabschnitten und zwei Grünteile zu konvexen zweiten Ringabschnitten umgeformt werden (FIG. 4B), die ersten und zweiten Ringabschnitte entlang einer Umfangsrichtung abwechselnd hintereinander angeordnet werden (FIG. 4C) und unter Temperatur- und Druckeinwirkung zu einem geschlossenen Bohrring verbunden werden (FIG. 4D).

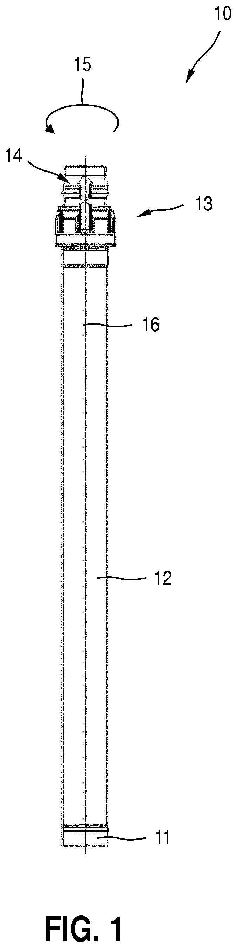

**FIG. 1** zeigt eine Kernbohrkrone **10** mit einem Bohrring **11**, einem zylinderförmigen Bohrschaft **12** und einem Aufnahmeabschnitt **13** mit Einsteckende **14.** Die Kernbohrkrone 10 wird über das Einsteckende 14 in der Werkzeugaufnahme eines Kernbohrgerätes befestigt und im Bohrbetrieb vom Kernbohrgerät in einer Drehrichtung **15** um eine Drehachse **16** angetrieben, wobei die Drehachse 16 koaxial zur Zylinderachse der Kernbohrkrone 10 verläuft.

Der Bohrring 11 ist mit dem Bohrschaft 12 verschweißt, verlötet, verschraubt oder in einer anderen geeigneten Befestigungsart am Bohrschaft 12 befestigt. Um den Bohrring 11 mit dem Bohrschaft 12 verschweißen zu können, muss der Verbindungsbereich zwischen Bohrring 11 und Bohrschaft 12 aus einem schweißbaren Material aufgebaut sein und darf keine Diamantpartikel enthalten, da Diamantpartikel nicht schweißbar sind.

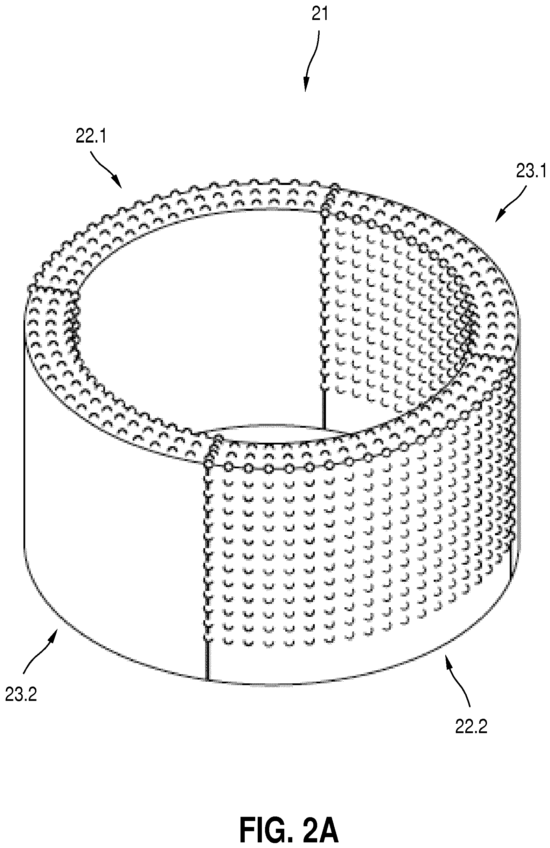

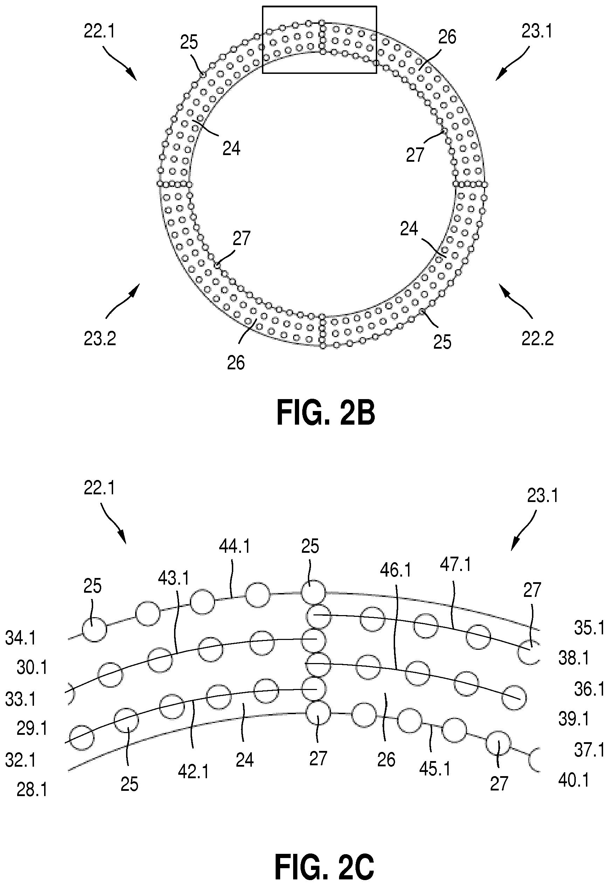

**FIGN. 2A-C** zeigen eine erste Ausführungsform eines erfindungsgemäßen Bohrringes **21**, der aus mehreren Ringabschnitten zusammengesetzt ist und den Bohrring 11 der Kernbohrkrone 10 der FIG. 1 ersetzen kann. Dabei zeigt FIG. 2A den Bohrring 21 in einer dreidimensionalen Darstellung, FIG. 2B den Bohrring 21 in einem Querschnitt senkrecht zur Drehachse 16 und FIG. 2C einen Ausschnitt aus dem Querschnitt der FIG. 2B im Verbindungsbereich zwischen zwei Ringabschnitten.

Der Bohrring 21 ist aus vier Ringabschnitten zusammengesetzt, die an den Seitenkanten miteinander verbunden sind und in Umfangsrichtung einen geschlossenen Ring bilden (FIG. 2A). Die Ringabschnitte des Bohrringes 21 lassen sich in zwei erste Ringabschnitte **22.1, 22.2** und zwei zweite Ringabschnitte **23.1, 23.2** unterteilen, die entlang der Umfangsrichtung des Bohrringes 21 abwechselnd hintereinander angeordnet sind. Die ersten Ringabschnitte 22.1, 22.2 bestehen aus einem ersten Pulvergemisch **24** und ersten Diamantpartikeln **25** und die zweiten Ringabschnitte 23.1, 23.2 bestehen aus einem zweiten Pulvergemisch **26** und zweiten Diamantpartikeln **27** (FIG. 2B).

FIG. 2C zeigt einen Ausschnitt aus dem Querschnitt der FIG. 2B im Verbindungsbereich zwischen dem ersten Ringabschnitt 22.1 und dem zweiten Ringabschnitt 23.1. Der erste Ringabschnitt 22.1 ist aus einer Anzahl von **m₁** Pulverschichten des ersten Pulvergemisches 24 und m₁ Diamantschichten der ersten Diamantpartikel 25 aufgebaut. Der zweite Ringabschnitt 23.1 ist aus einer Anzahl von **m₂** Pulverschichten des zweiten Pulvergemisches 26 und m₂ Diamantschichten der zweiten Diamantpartikel 27 aufgebaut. Im Ausführungsbeispiel der FIG. 2 weisen der erste Ringabschnitt 22.1 m₁ = 3 Pulverschichten **28.1, 29.1, 30.1** und m₁ = 3 Diamantschichten **32.1, 33.1, 34.1** und der zweite Ringabschnitt 23.1 m₂ = 3 Pulverschichten **35.1, 36.1, 37.1** und m₂ = 3 Diamantschichten **38.1, 39.1, 40.1** auf.

Die ersten Diamantpartikel 25 der Diamantschichten 32.1-34.1 sind auf drei kreisförmigen ersten Abtragbahnen **42.1, 43.1, 44.1** mit unterschiedlichen ersten Krümmungsradien **R₁ᵢ**, i = 1, 2, 3 angeordnet. Die zweiten Diamantpartikel 27 der Diamantschichten 38.1-40.1 sind auf drei kreisförmigen zweiten Abtragbahnen **45.1, 46.1, 47.1** mit unterschiedlichen zweiten Krümmungsradien **R₂ᵢ**, i = 1, 2,3 angeordnet. Die Auswahl der Werkstoffe für das erste und zweite Pulvergemisch 24, 26, die Auswahl der Diamantverteilung und -größe für die ersten und zweiten Diamantpartikel 25, 27 und die Anzahl m₁, m₂ der Diamantschichten und Abtragbahnen ermöglichen die Anpassung des Bohrringes 21 an unterschiedliche zu bearbeitende Untergründe.

Die Ringabschnitte 22.1, 22.2, 23.1, 23.2 sind schichtweise aus drei Pulverschichten und drei Diamantschichten aufgebaut. Beim schichtweisen Aufbau wird das Pulvergemisch in eine Matrize gefüllt und bildet die erste Pulverschicht. Die Diamantpartikel werden in einem Setzmuster als erste Diamantschicht auf bzw. in die erste Pulverschicht platziert. Um den Schichtaufbau zu verdichten, kann nach dem Platzieren der Diamantpartikel eine Zwischenpressung erfolgen. Anschließend wird das Pulvergemisch in die Matrize gefüllt und bildet die zweite Pulverschicht. Die Diamantpartikel werden in einem Setzmuster als zweite Diamantschicht auf bzw. in die zweite Pulverschicht platziert. Dieser Vorgang wird solange wiederholt, bis die gewünschte Aufbauhöhe des Grünteils erreicht ist. Als letzte Schicht wird eine Diamantschicht verwendet.

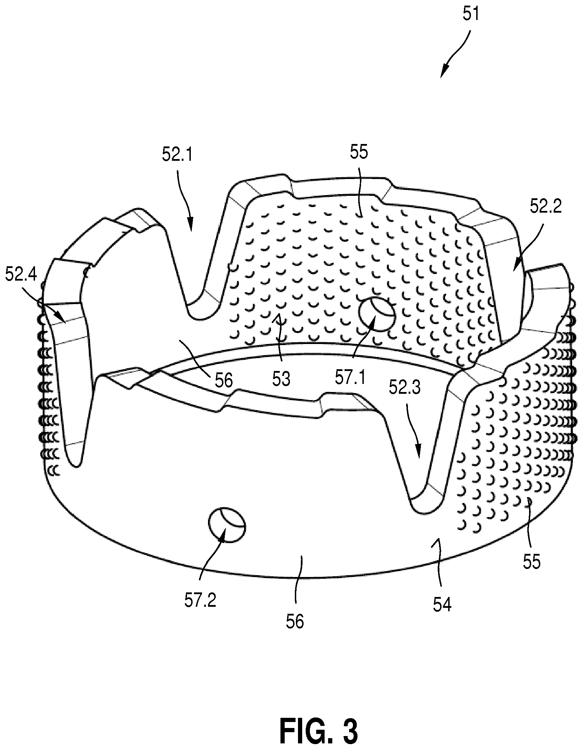

**FIG. 3** zeigt eine zweite Ausführungsform eines erfindungsgemäßen Bohrringes **51**, der aus vier Ringabschnitten besteht und den Bohrring 11 der Kernbohrkrone 10 ersetzen kann. Zwischen den Ringabschnitten sind vier Wasserschlitze **52.1, 52.2, 52.3, 52.4** ausgebildet, über die eine Kühlflüssigkeit an die Bearbeitungsstelle transportiert wird. Die Ringabschnitte sind so angeordnet, dass der Bohrring 51 an der Innenseite **53** und an der Außenseite **54** abwechselnd einen diamantbesetzten Bereich **55** und einen diamantlosen Bereich **56** aufweist.

Die Wasserschlitze 52.1-52.4 erstrecken sich über eine Höhe von ca. 2/3 der Gesamthöhe des Bohrringes 51. Um die Funktionsfähigkeit des Bohrringes 51 sicherzustellen, wenn die Wasserschlitze 52.1-52.4 abgetragen sind, weisen zwei Ringabschnitte eine Bohrung **57.1, 57.2** auf, über die Kühlflüssigkeit an die Bearbeitungsstelle transportiert wird.

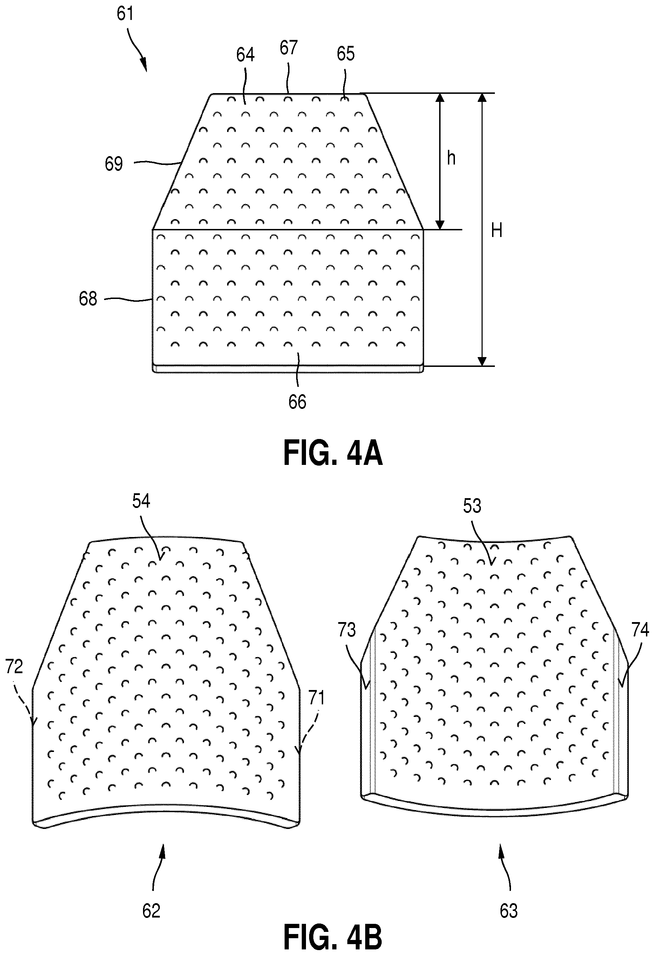

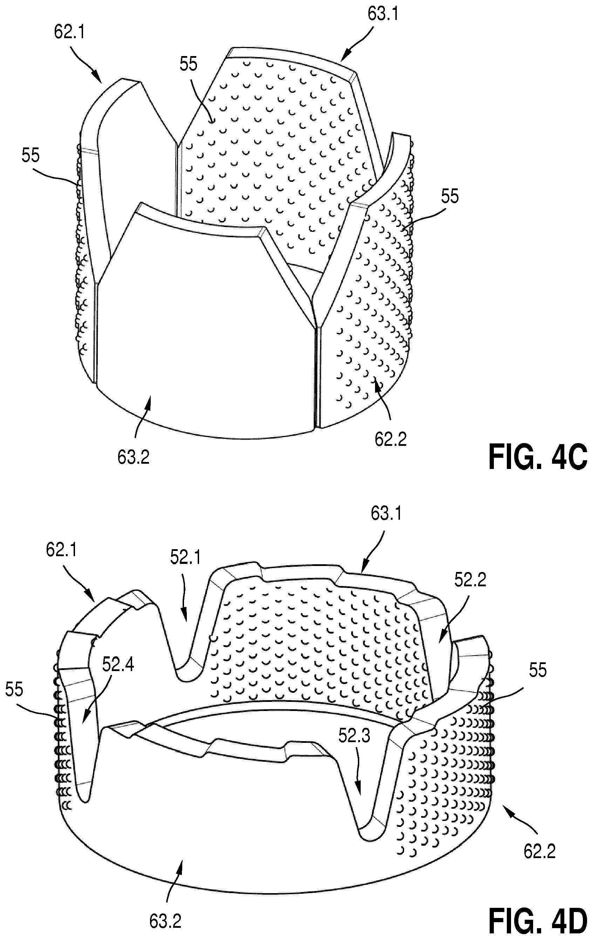

**FIGN. 4A-D** zeigen die Herstellung des Bohrringes 51 aus vier gleichen Grünteilen **61** mit einer sechseckigen Grundfläche (FIG. 4A). Zwei Grünteile 61 werden zu konkaven ersten Ringabschnitten **62** und zwei Grünteile 61 zu konvexen zweiten Ringabschnitten **63** umgeformt (FIG. 4B). Die ersten und zweiten Ringabschnitte 62, 63 werden entlang einer Umfangsrichtung des Bohrringes 51 abwechselnd hintereinander angeordnet (FIG. 4C) und unter Temperatur- und Druckeinwirkung zu einem geschlossenen Bohrring gesintert (FIG. 4D).

FIG. 4A zeigt den Aufbau des Grünteils 61, das schichtweise aus Pulverschichten eines Pulvergemisches **64** und Diamantschichten von Diamantpartikeln **65** hergestellt wurde. Das Grünteil 61 besteht aus einem Anbindungsbereich **66**, der auch als Fußzone bezeichnet wird, und einem Bearbeitungsbereich **67**, der auch als Matrixzone bezeichnet wird. Der Anbindungsbereich 66 und der Bearbeitungsbereich 67 können gemeinsam schichtweise aufgebaut werden, wobei im Anbindungsbereich keine Diamantpartikel 65 gesetzt werden. Alternativ kann der Anbindungsbereich als separater Bereich hergestellt und beim Sintern mit dem Bearbeitungsbereich verbunden werden.

Die Grundfläche der Grünteile 61 ist sechseckig ausgebildet und besteht aus einem Rechteck **68** und einem angrenzenden gleichschenkligen Trapez **69**, wobei sich der Anbindungsbereich 66 des Grünteils 61 im Rechteck 68 befindet. Im Bereich der Trapezschenkel werden beim Sintern durch zusätzliche Druckeinwirkung die Wasserschlitze 52.1-52.4 ausgebildet, über die Kühlflüssigkeit an die Bearbeitungsstelle transportiert wird. Die Höhe **h** des Trapezes 69 im Grünteil legt die Höhe der Wasserschlitze 52.1-52.4 fest. Im Ausführungsbeispiel entspricht die Höhe h des Trapezes 69 der halben Gesamthöhe **H** des Grünteils.

FIG. 4B zeigt den ersten Ringabschnitt 62, der aus dem Grünteil 61 der FIG. 4A unter Druckeinwirkung mit einer konvexen Krümmung erzeugt wurde, und den zweiten Ringabschnitt 63, der aus dem Grünteil 61 der FIG. 4A unter Druckeinwirkung mit einer konkaven Krümmung erzeugt wurde. Beim ersten Ringabschnitt 62 ist die Oberseite des Grünteils 61, die als Diamantschicht ausgebildet ist, auf der Außenseite 54 und beim zweiten Ringabschnitt 63 ist die Oberseite des Grünteils 61 auf der Innenseite 53 angeordnet.

Der erste Ringabschnitt 62 weist eine erste und zweite Seitenkante **71, 72** auf, die beim Sintern mit einer ersten und zweiten Seitenkante **73, 74** des zweiten Ringabschnittes 63 verbunden werden. Dabei werden die erste Seitenkante 71 des ersten Ringabschnittes 62 mit der zweiten Seitenkante 74 des zweiten Ringabschnittes 63 und die zweite Seitenkante 72 des ersten Ringabschnittes 62 mit der ersten Seitenkante 73 des zweiten Ringabschnittes 63 verbunden. Beim Bohrring 51 mit zwei ersten und zweiten Ringabschnitten 62.1, 62.2, 63.1, 63.2 werden jeweils die ersten und zweiten Seitenkanten der benachbarten Ringabschnitte miteinander verbunden.

FIG. 4C zeigt die ersten Ringabschnitte 62.1, 62.2 und zweiten Ringabschnitte 63.1, 63.2, die entlang einer Umfangsrichtung des Bohrringes 51 abwechselnd hintereinander angeordnet sind. Die Ringabschnitte 62.1, 63.1, 62.2, 63.2 bilden einen geschlossenen Bohrring und werden in der in FIG. 4C gezeigten Anordnung in einer Heißpresse weiter bearbeitet. FIG. 4D zeigt den geschlossenen Bohrring nach dem Heißpressen. Beim Heißpressen werden die Ringabschnitte 62.1, 63.1, 62.2, 63.2 einer Temperatur- und Druckeinwirkung unterzogen. Die Temperatureinwirkung sorgt dafür, dass das Pulvergemisch in den Ringabschnitten gesintert wird und die Ringabschnitte an den Seitenkanten miteinander verbunden werden. Durch Druckeinwirkung in axialer Richtung, d.h. parallel zur Drehachse des Bohrringes, erfolgt eine Kompression der Ringabschnitte, die zu einer Verdichtung der Ringabschnitte führt. Das Heißpressen erfolgt in einer Matrize, die die endgültige Form des Bohrringes festlegt.

## Patentansprüche

1. Bohrring (21; 51) für eine zylinderförmige Kernbohrkrone (10), mit mindestens zwei Ringabschnitten (22.1, 22.2, 23.1, 23.2; 62.1, 62.2, 63.1, 63.2), die aus einem gesinterten Pulvergemisch (24, 26; 64) und gesetzten Diamantpartikeln (25, 27; 65) aufgebaut sind, wobei die mindestens zwei Ringabschnitte (22.1, 22.2, 23.1, 23.2; 62.1, 62.2, 63.1, 63.2) eine Anzahl von n, n ≥ 1 ersten Ringabschnitten (22.1, 22.2; 62.1, 62.2) und n zweiten Ringabschnitten (23.1, 23.2; 63.1, 63.2) umfassen, die ersten Ringabschnitte (22.1, 22.2; 62.1, 62.2) und zweiten Ringabschnitte (23.1, 23.2; 63.1, 63.2) entlang einer Umfangsrichtung des Bohrringes (21; 51) abwechselnd hintereinander angeordnet sind und die ersten Ringabschnitte (22.1, 22.2; 62.1, 62.2) und zweiten Ringabschnitte (23.1, 23.2; 63.1, 63.2) an den Seitenkanten (71, 72, 73, 74) miteinander verbunden sind, **dadurch gekennzeichnet, dass**
die ersten Ringabschnitte (22.1, 22.2) aus einem gesinterten ersten Pulvergemisch (24) und gesetzten ersten Diamantpartikeln (25) aufgebaut sind und die zweiten Ringabschnitte (23.1, 23.2) aus einem gesinterten zweiten Pulvergemisch (26) und gesetzten zweiten Diamantpartikeln (27) aufgebaut sind, wobei die gesetzten ersten und zweiten Diamantpartikel (25, 27; 65) in einer Ebene senkrecht zur Zylinderachse auf kreisförmigen Abtragbahnen (42, 43, 44, 45, 46, 47) angeordnet sind.

2. Bohrring nach Anspruch 1, **dadurch gekennzeichnet, dass** die ersten Ringabschnitte (22.1, 22.2) einen diamantbesetzten Bereich (55) und die zweiten Ringabschnitte (23.1, 23.2) einen diamantlosen Bereich (56) auf der Außenseite (54) aufweisen.

3. Bohrring nach einem der Ansprüche 1 bis 2, **dadurch gekennzeichnet, dass** das erste Pulvergemisch (24) der ersten Ringabschnitte (22.1, 22.2) und das zweite Pulvergemisch (26) der zweiten Ringabschnitte (23.1, 23.2) übereinstimmen.

4. Bohrring nach einem der Ansprüche 1 bis 3, **dadurch gekennzeichnet, dass** die ersten Diamantpartikel (25) der ersten Ringabschnitte (22.1, 22.2) und die zweiten Diamantpartikel (27) der zweiten Ringabschnitte (23.1, 23.2) die gleiche Diamantverteilung und den gleichen mittleren Diamantdurchmesser aufweisen.

5. Bohrring nach einem der Ansprüche 1 bis 4, **dadurch gekennzeichnet, dass** die ersten Diamantpartikel (25) der ersten Ringabschnitte (22.1, 22.2) in der Ebene senkrecht zur Zylinderachse auf einer ersten Anzahl (m₁) von ersten Abtragbahnen (42, 43, 44) und die zweiten Diamantpartikel (27) der zweiten Ringabschnitte (23.1, 23.2) auf einer zweiten Anzahl (m₂) von zweiten Abtragbahnen (45, 46, 47) angeordnet sind.

6. Bohrring nach Anspruch 5, **dadurch gekennzeichnet, dass** die erste Anzahl (m₁) der ersten Abtragbahnen (42, 43, 44) und die zweite Anzahl (m₂) der zweiten Abtragbahnen (45, 46, 47) übereinstimmen.

7. Bohrring nach einem der Ansprüche 5 bis 6, **dadurch gekennzeichnet, dass** sich die ersten Krümmungsradien (R₁ᵢ) der ersten Abtragbahnen (42, 43, 44) von den zweiten Krümmungsradien (R₂ᵢ) der zweiten Abtragbahnen (45, 46, 47) unterscheiden.

8. Bohrring nach Anspruch 7, **dadurch gekennzeichnet, dass** die Anzahl der Abtragbahnen (m₁, m₂) und die Größe der Diamantpartikel (25, 27; 65) so eingestellt sind, dass der mittlere Diamantdurchmesser der Diamantpartikel (25, 27; 65) mindestens 45 % vom Quotienten aus Breite des Bohrringes (21; 51) und Anzahl der Abtragbahnen (m₁, m₂) beträgt.

9. Bohrring nach einem der Ansprüche 1 bis 8, **dadurch gekennzeichnet, dass** zwischen den Ringabschnitten (62.1, 62.2, 63.1, 63.2) mindestens ein Wasserschlitz (52.1, 52.2, 52.3, 52.4) vorgesehen ist.

10. Bohrring nach Anspruch 9, **dadurch gekennzeichnet, dass** die Höhe des mindestens einen Wasserschlitzes (52.1, 52.2, 52.3, 52.4) zwischen 1/3 und 5/6 der Gesamthöhe des Bohrringes (51) beträgt.

11. Bohrring nach einem der Ansprüche 9 bis 10, **dadurch gekennzeichnet, dass** mindestens ein Ringabschnitt (63.1, 63.2) eine Bohrung (57.1, 57.2) aufweist, die die Innen- und Außenseite (53, 54) des Bohrringes (51) verbindet.

## Claims

1. Drill ring (21; 51) for a cylindrical core drill bit (10), comprising at least two ring segments (22.1, 22.2, 23.1, 23.2; 62.1, 62.2, 63.1, 63.2) composed of a sintered powder mixture (24, 26; 64) and set diamond particles (25, 27; 65), wherein the at least two ring segments (22.1, 22.2, 23.1, 23.2; 62.1, 62.2, 63.1, 63.2) include a number of n, n ≥ 1 first ring segments (22.1, 22.2; 62.1, 62.2) and n second ring segments (23.1, 23.2; 63.1, 63.2), the first ring segments (22.1, 22.2; 62.1, 62.2) and second ring segments (23.1, 23.2; 63.1, 63.2) are arranged alternately one behind the other in the circumferential direction of the drill ring (21; 51) and the first ring segments (22.1, 22.2; 62.1, 62.2) and second ring segments (23.1, 23.2; 63.1, 63.2) are connected together at the side edges (71, 72, 73, 74), **characterised in that**
the first ring segments (22.1, 22.2) are composed of a sintered first powder mixture (24) and set first diamond particles (25) and the second ring segments (23.1, 23.2) are composed of a sintered second powder mixture (26) and set second diamond particles (27), wherein the set first and second diamond particles (25, 27; 65) are arranged on circular removal paths (42, 43, 44, 45, 46, 47) in a plane perpendicular to the cylinder axis.

2. Drill ring according to claim 1, **characterised in that** the first ring segments (22.1, 22.2) have a diamond-impregnated region (55) and the second ring segments (23.1, 23.2) have a diamond-free region (56) on the outer face (54).

3. Drill ring according to one of claims 1 to 2, **characterised in that** the first powder mixture (24) of the first ring segments (22.1, 22.2) and the second powder mixture (26) of the second ring segments (23.1, 23.2) are identical.

4. Drill ring according to one of claims 1 to 3, **characterised in that** the first diamond particles (25) of the first ring segments (22.1, 22.2) and the second diamond particles (27) of the second ring segments (23.1, 23.2) have the same diamond distribution and the same mean diamond diameter.

5. Drill ring according to one of claims 1 to 4, **characterised in that** the first diamond particles (25) of the first ring segments (22.1, 22.2) are arranged on a first number (m₁) of first removal paths (42, 43, 44) in the plane perpendicular to the cylinder axis and the second diamond particles (27) of the second ring segments (23.1, 23.2) are arranged on a second number (m₂) of second removal paths (45, 46, 47).

6. Drill ring according to claim 5, **characterised in that** the first number (m₁) of first removal paths (42, 43, 44) and the second number (m₂) of second removal paths (45, 46, 47) are identical.

7. Drill ring according to one of claims 5 to 6, **characterised in that** the first radii of curvature (R₁ᵢ) of the first removal paths (42, 43, 44) differ from the second radii of curvature (R₂ᵢ) of the second removal paths (45, 46, 47).

8. Drill ring according to claim 7, **characterised in that** the number of removal paths (m₁, m₂) and the size of the diamond particles (25, 27; 65) are adapted in such a manner that the mean diamond diameter of the diamond particles (25, 27; 65) is at least 45 % of the quotient of the width of the drill ring (21; 51) and the number of removal paths (m₁, m₂).

9. Drill ring according to one of claims 1 to 8, **characterised in that** at least one water slot (52.1, 52.2, 52.3, 52.4) is provided between the ring segments (62.1, 62.2, 63.1, 63.2).

10. Drill ring according to claim 9, **characterised in that** the height of the at least one water slot (52.1, 52.2, 52.3, 52.4) is between 1/3 and 5/6 of the total height of the drill ring (51).

11. Drill ring according to one of claims 9 to 10, **characterised in that** at least one ring segment (63.1, 63.2) has a bore (57.1, 57.2) that connects the inner and outer faces (53, 54) of the drill ring (51).

## Revendications

1. Couronne de forage (21 ; 51) pour un trépan de carottage cylindrique (10), comportant au moins deux segments de couronne (22.1, 22.2, 23.1, 23.2 ; 62.1, 62.2, 63.1, 63.2) construits à partir d'un mélange pulvérulent fritté (24, 26 ; 64) et de particules de diamant fixées (25, 27 ; 65), dans laquelle les au moins deux segments de couronne (22.1, 22.2, 23.1, 23.2 ; 62.1, 62.2, 63.1, 63.2) comprennent un ensemble de n , n ≥ 1, premiers segments de couronne (22.1, 22.2 ; 62.1, 62.2) et de n seconds segments de couronne (23.1, 23.2 ; 63.1, 63.2), les premiers segments de couronne (22.1, 22.2 ; 62.1, 62.2) et les seconds segments de couronne (23.1, 23.2 ; 63.1, 63.2) sont agencés de manière alternée les uns derrière les autres le long d'une direction circonférentielle de la couronne de forage (21 ; 51) et les premiers segments de couronne (22.1, 22.2 ; 62.1, 62.2) et les seconds segments de couronne (23.1, 23.2 ; 63.1, 63.2) sont reliés les uns aux autres au niveau des bords latéraux (71, 72, 73, 74),
**caractérisée en ce que**
les premiers segments de couronne (22.1, 22.2) sont construits à partir d'un premier mélange pulvérulent fritté (24) et de premières particules de diamant fixées (25) et les seconds segments de couronne (23.1, 23.2) sont construits à partir d'un second mélange pulvérulent fritté (26) et de secondes particules de diamant fixées (27), dans laquelle les premières et secondes particules de diamant fixées (25, 27 ; 65) sont agencées sur des pistes d'enlèvement circulaires (42, 43, 44, 45, 46, 47) dans un plan perpendiculaire à l'axe de cylindre.

2. Couronne de forage selon la revendication 1, **caractérisée en ce que** les premiers segments de couronne (22.1, 22.2) comportent une zone diamantée (55) et les seconds segments de couronne (23.1, 23.2) comportent une zone sans diamant (56) sur le côté extérieur (54).

3. Couronne de forage selon l'une des revendications 1 à 2, **caractérisée en ce que** le premier mélange pulvérulent (24) des premiers segments de couronne (22.1, 22.2) et le second mélange pulvérulent (26) des seconds segments de couronne (23.1, 23.2) correspondent.

4. Couronne de forage selon l'une des revendications 1 à 3, **caractérisée en ce que** les premières particules de diamant (25) des premiers segments de couronne (22.1, 22.2) et les secondes particules de diamant (27) des seconds segments de couronne (23.1, 23.2) ont la même répartition des diamants et le même diamètre moyen de diamant.

5. Couronne de forage selon l'une des revendications 1 à 4, **caractérisée en ce que** les premières particules de diamant (25) des premiers segments de couronne (22.1, 22.2) sont agencées sur un premier ensemble (m₁) de premières pistes d'enlèvement (42, 43, 44) dans le plan perpendiculaire à l'axe de cylindre et les secondes particules de diamant (27) des seconds segments de couronne (23.1, 23.2) sont agencées sur un second ensemble (m₂) de secondes pistes d'enlèvement (45, 46, 47).

6. Couronne de forage selon la revendication 5, **caractérisée en ce que** le premier ensemble (m₁) des premières pistes d'enlèvement (42, 43, 44) et le second ensemble (m₂) des secondes pistes d'enlèvement (45, 46, 47) correspondent.

7. Couronne de forage selon l'une des revendications 5 à 6, **caractérisée en ce que** les premiers rayons de courbure (R₁ᵢ) des premières pistes d'enlèvement (42, 43, 44) sont différents des seconds rayons de courbure (R₂ᵢ) des secondes pistes d'enlèvement (45, 46, 47).

8. Couronne de forage selon la revendication 7, **caractérisée en ce que** l'ensemble de pistes d'enlèvement (m₁, m₂) et la taille des particules de diamant (25, 27 ; 65) sont définis de telle sorte que le diamètre moyen de diamant des particules de diamant (25, 27 ; 65) est au moins égal à 45 % du quotient entre la largeur de la couronne de forage (21 ; 51) et l'ensemble de pistes d'enlèvement (m₁, m₂).

9. Couronne de forage selon l'une des revendications 1 à 8, **caractérisée en ce qu'**une fente d'eau (52.1, 52.2, 52.3, 52.4) est prévue entre les segments de couronne (62.1, 62.2, 63.1, 63.2).

10. Couronne de forage selon la revendication 9, **caractérisée en ce que** la hauteur de la au moins une fente d'eau (52.1, 52.2, 52.3, 52.4) est comprise entre 1/3 et 5/6 de la hauteur totale de la couronne de forage (51) .

11. Couronne de forage selon l'une des revendications 9 à 10, **caractérisée en ce qu'**au moins un segment de couronne (63.1, 63.2) comporte un trou (57.1, 57.2) qui relie les côtés intérieur et extérieur (53, 54) de la couronne de forage (51).
